# EUROPÄISCHE PATENTSCHRIFT

(11) **EP 0 832 791 B1**
(45) Veröffentlichungstag und Bekanntmachung des Hinweises auf die Patenterteilung: **08.10.2003**
(21) Anmeldenummer: 97114836.6
(22) Anmeldetag: 27.08.1997
(51) Int. Cl.: B60R 21/20

(54) **Gassack-Modul für ein Fahrzeuginsassen-Rückhaltesystem**
Airbag module for a vehicle passenger restraint system
Module de sac gonflable pour système de retenue des passagers d'un véhicule

(30) Priorität: 27.09.1996 DE 29616916 U
(43) Veröffentlichungstag der Anmeldung: 01.04.1998
(73) Patentinhaber: TRW Occupant Restraint Systems GmbH & Co. KG, 73551 Alfdorf (DE)
(72) Erfinder: Fischer, Anton, 73572 Heuchlingen (DE)
(74) Vertreter: Degwert, Hartmut, Dipl.-Phys.

(56) Entgegenhaltungen:
- EP-A- 0 376 564
- DE-A- 4 343 278
- US-A- 4 938 503
- US-A- 5 176 400
- US-A- 5 409 256
- US-A- 5 470 100

## Beschreibung

Die Erfindung betrifft ein Gassack-Modul nach dem Oberbegriff des Anspruchs 1. Die Erfindung betrifft außerdem ein Fahrzeuglenkrad mit einem derartigen Gassak-Modul.

Ein solches Gassack-Modul ist beispielsweise in einem Fahrzeuglenkrad, wenn es sich um ein fahrerseitiges Gassack-Modul handelt, oder am Armaturenbrett auf der Beifahrerseite angebracht, um eine Schutzwirkung für den Fahrzeuginsassen bereitzustellen, indem im Bedarfsfall der Gassack durch von dem Gasgenerator bereitgestelltes Druckgas entfaltet wird. Üblicherweise wird das Gassack-Modul mit dem Fahrzeug durch separate Befestigungselemente verbunden, beispielsweise durch Schrauben oder Niete.

Ein gattungsgemäßes Gassack-Modul ist beispielsweise aus der DE 4 343 278 A1 bekannt.

In der US-A-5 409 256 ist ein Gassack-Modul beschrieben, das an einem Lenkrad befestigt ist. Die Befestigung erfolgt dabei über am Modul angebrachte Bolzen, die in Öffnungen von Halteteilen anlenkrad greifen. In der Bolzen sind Nuten vorgesehen mit denen die Bolzen durch Federn in den Halteteilen arretiert werden.

Die Erfindung schallt ein Gassack-Modul nach Anspruch 1. Damit können dieselben Montageschrauben, die für das Befestigen der verschiedenen Komponenten des Gassack-Moduls verwendet werden, gleichzeitig zur Montage des Gassack-Moduls herangezogen werden. Es entfallen somit die nach dem Stand der Technik notwendigen zusätzlichen Befestigungselemente. Daraus ergibt sich eine Verminderung des Gewichts sowie der Kosten des Gassack-Moduls.

Bei dieser Gestaltung kann, in die Nut ein sich in dem Fahrzeugteil quer zur Längsrichtung der Montageschraube erstreckendes Arretierteil eingreifen. Auf diese Weise kann das erfindungsgemäBe Gassack-Modul in besonders einfacher Weise an einem Fahrzeugteil befestigt werden.

Gemäβ einen zweite Aspekt schallt die Erfindung ein Fahrzeuglenkrad nach Anspruch 4.

Vorteilhafte Ausführungsformen der Erfindung ergeben sich aus den Unteransprüchen.

Die Erfindung wird nachfolgend unter Bezugnahme auf eine bevorzugte Ausführungsform beschrieben, die in der beigefügten Zeichnung dargestellt ist. In dieser zeigt die einzige Figur einen schematischen Querschnitt durch ein erfindungsgemäßes Gassack-Modul, das an einem Fahrzeuglenkrad angebracht ist.

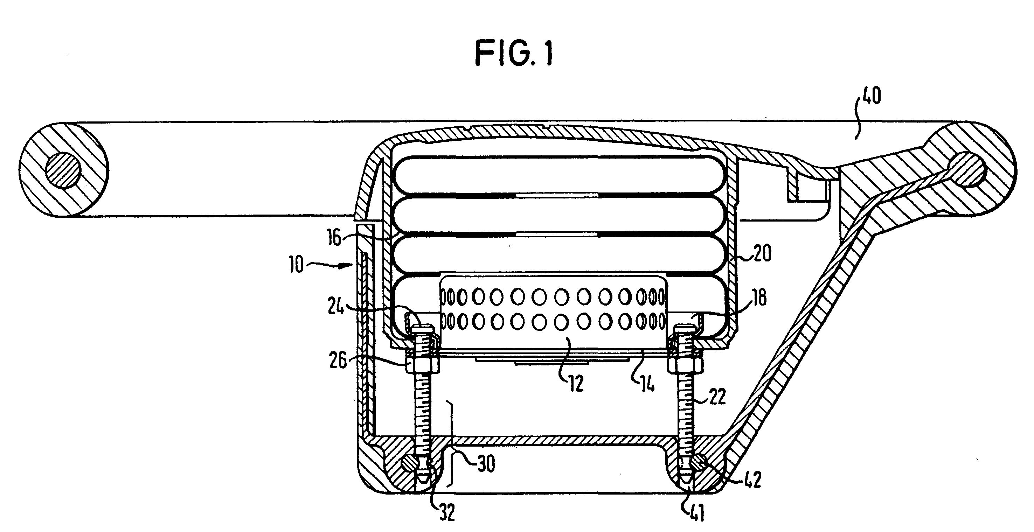

Das in Fig. 1 dargestellte Gassack-Modul 10 besteht aus einem Gasgenerator 12, der mit einer Montageplatte 14 versehen ist, sowie aus einem mit dem Gasgenerator 12 in Strömungsverbindung stehenden Gassack 16, einem Haltering 18 und einer Gassack-Abdeckung 20. Der Haltering 18, die Berandung der Einblasöffnung des Gassacks 16, die Abdeckung 20 und die Montageplatte 14 des Gasgenerators 12 sind fest miteinander durch Schrauben 22 verbunden. Diese Schrauben 22 weisen an ihrem im Inneren des Gassack-Moduls 10 angeordneten Ende einen Anlagekopf 24 sowie ein Gewinde auf, auf das eine Mutter 26 aufgeschraubt ist. Der Haltering 18, der Gassack 16, die Gassack-Abdeckung 20 und die Montageplatte 14 des Gassack-Moduls 12 sind zwischen dem Anlagekopf 24 und der Mutter 26 eingespannt. Zur Erleichterung der Montage kann vorgesehen sein, daß die Schrauben 22 fest in den Haltering 18 eingepreßt sind.

An ihrem außerhalb des Gassack-Moduls 10 liegenden Ende sind die Schrauben 22 mit einem Befestigungsfortsatz 30 versehen, der eine in Umfangsrichtung verlaufende Nut 32 aufweist. Zur Anbringung des erfindungsgemäßen Gassack-Moduls 10 am schematisch dargestellten Fahrzeuglenkrad 40 (oder einem beliebigen anderen Fahrzeugteil) werden die Befestigungsfortsätze 30 der Schrauben 22 in geeignete Haltebohrungen 41 eingesteckt. Dann werden sich senkrecht zu den Schrauben 22 erstreckende Arretierteile 42 in geeignete Bohrungen eingebracht, so daß sie in die Umfangsnuten 32 eingreifen und ein Herausziehen der Schrauben 22 aus den Haltebohrungen 40 verhindern. Somit ist das erfindungsgemäße Gassack-Modul 10 mit minimalem Aufwand in sicherer und zuverlässiger Weise am Fahrzeug montiert.

## Patentansprüche

1. Gassack-Modul für ein Fahrzeuginsassen-Rückhaltesystem, mit einem Gasgenerator (12), einem Gassack (16) und mindestens zwei Montageschrauben (22), die an ihrem im Inneren des Gassack-Moduls (10) liegenden Ende jeweils einen Anlagekopf (24) aufweisen, wobei zwischen dem Anlagekopf (24) und einer auf den Schaft der Montageschraube (22) aufgeschraubten Mutter (26) die Berandung der Einblasöfihung des Gassacks (16) eingespannt ist, **dadurch gekennzeichnet, daß** die Montageschrauben (20) jeweils einen von dem Gassack-Modul (10) abragenden Befestigungsfortsatz (30) zur Montage des Gassack-Moduls (10) an einem Fahrzeugteil aufweisen, der eine in Umfangsrichtung verlaufende Nut (32) aufweist.

2. Gassack-Modul nach Anspruch 1, **dadurch gekennzeichnet, daß** im Inneren des Gassacks (16) ein Haltering (18) angeordnet ist, in den das im Inneren des Gassacks (16) liegende Ende der Schrauben (22) eingepreßt ist, daß der Gasgenerator (12) eine Montageplatte (14) aufweist und daß die Berandung der Einblasöffiiung des Gassacks (16) zwischen dem Haltering (18) und der Montageplatte (14) eingespannt ist.

3. Gassack-Modul nach Anspruch 2, **dadurch gekennzeichnet, daß** es eine Gassack-Abdeckung (20) aufweist, die zwischen dem Haltering (18) und der Montageplatte (14) eingespannt ist.

4. Fahrzeuglenkrad mit einem Gassack-Modul nach einem der vorhergehenden Ansprüche, **dadurch gekennzeichnet, daß** in die Nut (32) des Befestigungsfortsatzes (30) ein sich in dem Lenkrad quer zur Längsrichtung der Montageschraube (22) erstreckendes Arretierteil (42) eingreift.

## Claims

1. A gas bag module for a vehicle occupant restraint system, comprising an inflator (12), a gas bag (16) and at least two fitting bolts (22) each of which includes an abutment head (24) at its end located in the interior of the gas bag module (10), the rim of the inflation opening of the gas bag (16) being clamped in place between the abutment head (24) and a nut (26) screwed onto the shank of the fitting bolt (22), **characterised in that** each of the fitting bolts (22) has a fastening projection (30) which protrudes from the gas bag module (10) for fitting the gas bag module (10) to a vehicle part and has a circumferentially extending groove (32).

2. The gas bag module as set forth in claim 1, **characterised in that** in the interior of the gas bag (16) a holding ring (18) is arranged in which the end, located in the interior of the gas bag (16), of each of the bolts (22) is held by a press-fit, **in that** the inflator (12) comprises a mounting plate (14), and **in that** the rim of the inflation opening of the gas bag (16) is clamped in place between the holding ring (18) and the mounting plate (14).

3. The gas bag module as set forth in claim 2, **characterised in that** it includes a gas bag cover (20) which is clamped in place between the holding ring (18) and the mounting plate (14).

4. A vehicle steering wheel comprising a gas bag module as set forth in any of the preceding claims, **characterised in that** an arresting part (42) extending in the steering wheel transversely to the longitudinal direction of the fitting bolt (22) engages in the groove (32) of the fastening projection (30).

## Revendications

1. Module de coussin à gaz pour un système de retenue des occupants d'un véhicule, comprenant un générateur de gaz (12), un coussin à gaz (16) et au moins deux vis de montage (22) qui présentent chacune une tête d'appui (24) à leur extrémité située à l'intérieur du module de coussin à gaz (10), le bord de l'orifice de gonflage du coussin à gaz (16) étant serré entre la tête d'appui (24) et un écrou (26) vissé sur la tige de la vis de montage (22), **caractérisé en ce que** les vis de montage (22) comportent chacune un prolongement de fixation (30) qui dépasse du module de coussin à gaz (10) pour monter le module de coussin à gaz (10) sur une partie de véhicule et qui présente une gorge (32) s'étendant dans le sens circonférentiel.

2. Module de coussin à gaz selon la revendication 1, **caractérisé en ce qu'**à l'intérieur du coussin à gaz (16) est agencé un anneau de retenue (18) dans lequel est emmanchée à force l'extrémité des vis (22) située à l'intérieur du coussin à gaz (16), **en ce que** le coussin à gaz (12) présente une plaque de montage (14) et **en ce que** le bord de l'orifice de gonflage du coussin à gaz (16) est serré entre l'anneau de retenue (18) et la plaque de montage (14).

3. Module de coussin à gaz selon la revendication 2, **caractérisé en ce qu'**il présente un couvercle (20) de coussin à gaz qui est serré entre l'anneau de retenue (18) et la plaque de montage (14).

4. Volant de véhicule comportant un module de coussin à gaz selon l'une des revendications précédentes, **caractérisé en ce qu'**une pièce d'arrêt (42) s'étendant, dans le volant, perpendiculairement à la direction longitudinale de la vis de montage (22), pénètre dans la gorge (32).
